# FASCICULE DE BREVET EUROPEEN

(11) **EP 2 574 551 B1**
(45) Date de publication et mention de la délivrance du brevet: **31.08.2016**
(21) Numéro de dépôt: 12186328.6
(22) Date de dépôt: 27.09.2012
(51) Int. Cl.: B64D 11/06, B64D 45/00

(54) **Poste de pilotage d'un aéronef comportant un strapontin**
Cockpit eines Luftfahrzeugs mit einen Notsitz
Cockpit of an aircraft comprising a folding seat

(30) Priorité: 30.09.2011 FR 1158792
(43) Date de publication de la demande: 03.04.2013
(73) Titulaire: Airbus Operations, 31060 Toulouse (FR)
(72) Inventeur: Guering, Bernard, 31850 MONTRABE (FR)
(74) Mandataire: Santarelli

(56) Documents cités:
- US-A1- 2003 066 931
- US-A1- 2005 230 550
- US-A1- 2009 065 641

## Description

La présente invention concerne un poste de pilotage d'aéronef équipé d'un strapontin.

Le domaine de la présente invention est l'aménagement intérieur d'un poste de pilotage d'aéronef, appelé aussi cockpit d'aéronef, ou plus généralement de la partie avant d'un aéronef. Il s'agit ici d'aéronefs à usage commercial, pour le transport de passagers et/ou de marchandises. Un tel aéronef présente alors de manière classique une partie avant destinée à accueillir en général un pilote et un copilote ainsi qu'une partie "commerciale" disposée à l'arrière de la partie avant pour recevoir les passagers et/ou du fret.

Dans un cockpit d'un tel aéronef on trouve alors un siège pour le pilote et un autre pour le copilote. Il arrive également qu'un troisième siège soit prévu dans le cockpit pour un observateur ou un instructeur. Ce troisième siège n'étant utilisé qu'exceptionnellement, il s'agit en général d'un strapontin.

Un strapontin pour aéronef est décrit par exemple dans le document EP-0 282 541 ou bien encore dans le document EP-0 349 762. Ces documents concernent uniquement la structure d'un strapontin mais pas son intégration dans un aéronef.

Le document FR-2 547 273 décrit un poste de pilotage d'aéronef ergonomique prévu pour deux pilotes mais il n'est pas prévu dans la description de ce document la présence d'un troisième membre d'équipage (ou autre). Le document FR-2 903 661 qui concerne une structure générale d'aéronef, sur sa figure 5, montre quant à lui un exemple d'aménagement de poste de pilotage d'un aéronef pour trois personnes. Le document FR-2 900 634 montre également un poste de pilotage avec trois sièges mais il s'agit là d'un aéronef à usage essentiellement militaire. Dans un aéronef militaire, les contraintes techniques et économiques sont différentes sur bien des points par rapport aux contraintes rencontrées pour la réalisation d'un aéronef civil à usage commercial. L'arrière-plan technologique est également illustré par le document US 2005/0230550 A1.

La présente invention a pour but de fournir des moyens ergonomiques pour permettre d'accueillir en position assise une troisième personne dans un cockpit d'aéronef. Ce cockpit est de préférence optimisé à différents points de vue.

L'encombrement du troisième siège est de préférence limité. Avantageusement, la solution fournie par l'invention est adaptable sur des aéronefs de type monocouloir (par exemple famille des aéronefs commercialisés par la Société Airbus sous la marque A320) ainsi que sur des aéronefs de plus grande taille.

De manière classique, un cockpit d'aéronef comprend de nombreux matériels techniques (calculateurs, systèmes, ...). L'intégration d'un troisième siège (en plus du siège du pilote et du siège du copilote) ne se fait de préférence pas au détriment de l'aménagement des matériels techniques.

Un cockpit présente aussi des contraintes de sécurité. Il convient d'éviter une intrusion dans le cockpit d'une personne non autorisée. L'invention veille également à intégrer ces contraintes.

Un cockpit présente aussi de manière classique, d'une part, une évacuation d'urgence vers le haut et, d'autre part, un accès à une soute technique. De préférence, la présente invention permet de faciliter l'accès aux moyens permettant l'évacuation d'urgence vers le haut et/ou permet un accès aisé à la soute technique.

Il a été remarqué que lorsqu'un siège additionnel est présent dans un cockpit, il est de plus en plus souvent utilisé pour le transport (non payant le plus souvent) d'une personne (par exemple personnel navigant) afin de ne pas monopoliser une place dans la cabine de l'aéronef. Le siège additionnel est alors de préférence confortable pour permettre une utilisation confortable, même sur une durée relativement longue.

La présente invention vise à remédier à au moins une partie des inconvénients précités.

A cet effet, est proposé un poste de pilotage d'un aéronef comportant des organes de commande et/ou visualisation, au moins un siège, une porte d'accès, et un couloir d'accès audit siège fermé à son extrémité opposée audit siège par la porte d'accès.

Selon la présente invention, un strapontin, comportant un châssis pivotant autour d'un axe vertical et sur lequel sont montés une assise et un dossier, est monté dans le couloir de telle sorte qu'il puisse pivoter et prendre une première position dans laquelle il ferme le couloir formant ainsi un sas avec la porte d'accès et une deuxième position dans laquelle il permet l'accès audit siège à partir du couloir.

Une telle configuration du poste de pilotage permet une optimisation de l'espace. En effet, il est ainsi possible de prévoir un siège supplémentaire (le strapontin) dans le poste de pilotage sans prévoir d'espace supplémentaire dédié à ce siège.

Un tel strapontin pour aéronef, comportant un châssis sur lequel sont montés une assise, un dossier, comporte aussi avantageusement un appui-tête.

Le fait de faire d'un strapontin, qui est généralement intégré à un châssis fixe, un élément mobile, permet de faire prendre au strapontin plusieurs positions et de remplir diverses fonctions comme expliqué plus loin. En outre, s'il est intégré à une porte, un gain d'espace peut être obtenu par cette intégration.

Dans une forme de réalisation d'un strapontin selon l'invention, son châssis présente des montants verticaux, et l'un des montants verticaux est muni de moyens de fixation permettant sa fixation à une huisserie de manière à pouvoir pivoter d'un angle d'au moins 135°. De préférence, le strapontin pourra pivoter d'au moins 180°, par exemple jusqu'à 270°.

Pour être plus polyvalent et servir par exemple de siège pour un observateur ou tout simplement de siège pour un voyageur, un strapontin selon l'invention est avantageusement tel que la hauteur de son assise est réglable. Pour un meilleur confort, son dossier peut être inclinable.

Lorsque le strapontin doit également remplir des fonctions de sécurisation du cockpit qu'il équipe et former une porte blindée, il est avantageux qu'il comporte en partie basse et en partie haute à chaque fois une plaque coulissante blindée. Pour ces mêmes fonctions, la face arrière de l'assise, la face arrière du dossier et, le cas échéant, la face arrière de l'appui-tête, c'est-à-dire à chaque fois la face n'étant pas destinée à venir au contact d'un utilisateur du strapontin, sont avantageusement renforcées de manière à être résistantes à l'impact de projectiles d'une arme à feu.

Pour une forme de réalisation avantageuse dans laquelle le strapontin peut être utilisé pour faciliter l'accès à une soute inférieure, ledit strapontin porte sur sa face arrière, c'est-à-dire la face opposée à celle destinée à recevoir un utilisateur, une échelle montée par l'intermédiaire d'au moins un parallélogramme déformable.

Dans une forme de réalisation avantageuse, il est prévu que le strapontin dans sa deuxième position est rabattu contre un élément délimitant le couloir et qu'il puisse également prendre une troisième position pivotée d'au moins 135° par rapport à la deuxième position.

Une forme de réalisation avantageuse prévoit que le couloir d'accès comporte un sol dans lequel se trouve une trappe d'accès à une zone technique inférieure. La trappe d'accès est alors de préférence positionnée de telle sorte qu'elle se trouve à l'arrière du strapontin dans une position de celui-ci. La trappe d'accès se trouve par exemple à proximité immédiate du strapontin, et de préférence juste derrière le strapontin, lorsque celui-ci est dans sa première position.

Un poste de pilotage d'un aéronef selon l'invention est avantageusement aussi tel que le couloir d'accès comporte un plafond dans lequel se trouve une trappe de secours et d'évacuation d'urgence. La trappe de secours et le strapontin sont positionnés l'un par rapport à l'autre de telle sorte que la trappe de secours puisse se trouver au-dessus de l'assise - se trouvant dans une position sensiblement horizontale - du strapontin dans l'une des positions que ce dernier peut prendre, par exemple lorsque le strapontin est rabattu contre un élément délimitant le couloir.

Dans une forme de réalisation préférée, adaptée notamment à un poste de pilotage comportant initialement deux sièges (et donc en plus un strapontin conformément à l'invention), le couloir est délimité latéralement par des meubles. De cette manière, le couloir peut être centré par rapport à l'axe de l'aéronef et déboucher ainsi entre les deux sièges prévus respectivement pour un pilote et un copilote. On pourrait toutefois envisager un couloir délimité d'un côté au moins par une paroi, ou autre, et non pas des meubles (espace de rangement mais aussi par exemple armoire technique pour des systèmes avioniques ou bien pour des cuisines ou autres équipements de confort).

Lorsque le couloir est disposé entre des meubles, on prévoit avantageusement qu'au moins un meuble comporte un montant structural et que le strapontin est monté pivotant par rapport audit montant structural. Ce montant structural a ainsi deux missions et il n'est pas nécessaire de recréer un montant pour le strapontin.

Pour le poste de pilotage selon l'invention, comme déjà mentionné plus haut, le strapontin peut comporter en partie basse et en partie haute à chaque fois une plaque coulissante, de préférence blindée. Avantageusement, pour des raisons de sécurité, le strapontin ainsi renforcé, à l'aide éventuellement d'une ou de plusieurs plaque(s) coulissante(s) blindée(s) vient fermer l'accès au cockpit et former ainsi un sas sécurisé. Le strapontin dans sa première position vient ainsi fermer le sas à l'aide des plaques coulissantes.

De même, la face arrière du strapontin, c'est-à-dire la face n'étant pas destinée à venir au contact d'un utilisateur du strapontin, est avantageusement renforcée de manière à être résistante à l'impact de projectiles d'une arme à feu, par exemple grâce à une plaque blindée.

On peut aussi prévoir, comme déjà évoqué, que le strapontin d'un poste de pilotage selon la présente invention porte sur sa face arrière, c'est-à-dire la face opposée à celle destinée à recevoir un utilisateur, une échelle montée par l'intermédiaire d'au moins un parallélogramme déformable.

Dans un poste de pilotage selon l'invention, le strapontin peut être réglable en hauteur, par exemple en prévoyant que le strapontin est monté sur des pièces structurales du poste de pilotage par l'intermédiaire d'au moins un profilé intermédiaire pouvant coulisser sur une pièce structurale portant le strapontin.

On peut également prévoir que le dossier du strapontin est inclinable.

Enfin, la présente invention concerne également un aéronef, caractérisé en ce qu'il comporte un poste de pilotage tel que décrit ci-dessus.

Des détails et avantages de la présente invention ressortiront mieux de la description qui suit, faite en référence aux dessins schématiques annexés sur lesquels :
La figure 1 montre de manière schématique en vue de dessus partielle une partie avant d'aéronef selon la présente invention,
La figure 2 montre en perspective trois positions pouvant être prises par un strapontin selon la présente invention,
La figure 3 montre en vue de côté schématique une partie avant d'aéronef selon la présente invention,
La figure 4 montre en perspective un détail, à échelle agrandie, d'un strapontin selon la présente invention,
La figure 5 est une vue de côté schématique montrant une partie d'un strapontin selon la présente invention dans deux positions,
La figure 6 est une vue de côté schématique représentant un strapontin selon la présente invention dans une première position d'utilisation,
La figure 7 correspond à la figure 6 pour une autre position d'utilisation,
La figure 8 est une vue en perspective d'un strapontin selon la présente invention, et
La figure 9 est une vue de détail montrant une section partielle selon un plan de coupe sensiblement horizontal d'un tel strapontin.

La présente invention concerne plus particulièrement une partie avant d'aéronef pouvant accueillir au moins trois occupants, un pilote, un copilote et un observateur (ou autre). La partie avant de l'aéronef comprend le poste de pilotage, ou cockpit, dans lequel les trois occupants peuvent prendre place.

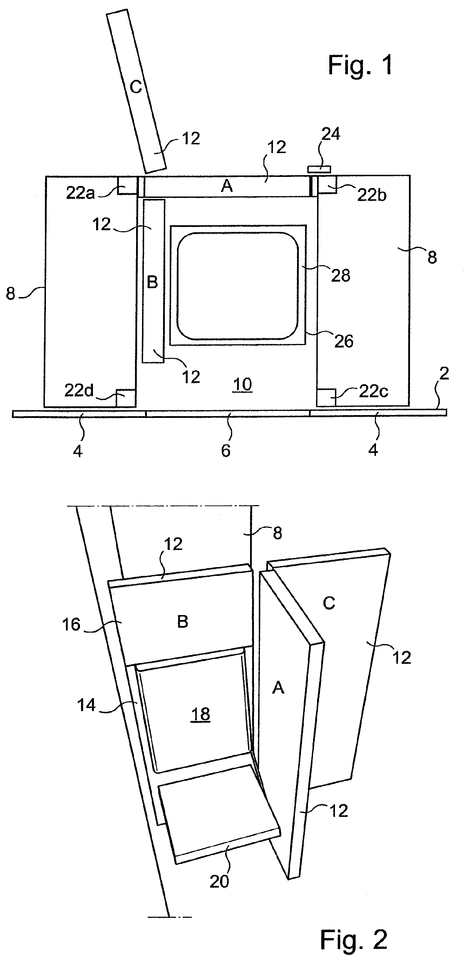

La figure 1 illustre une paroi de séparation 2 permettant de séparer dans un aéronef le poste de pilotage d'une cabine destinée à accueillir des passagers et/ou éventuellement du fret. Les divers éléments représentés sur la figure 1 se trouvent tous d'un même côté de la paroi de séparation 2, du côté du poste de pilotage. La paroi de séparation 2 comporte des panneaux fixes 4 et une porte 6 représentée ici dans sa position fermée.

L'aéronef considéré ici est de préférence un aéronef de taille moyenne mais il peut s'agir aussi d'un aéronef soit plus grand, soit plus petit. Par aéronef de taille moyenne, on entend ici un aéronef qui, lorsqu'il est configuré pour accueillir des passagers, comporte une cabine avec des sièges - environ 100 à 220 sièges - disposés de part et d'autre d'un unique couloir. Un aéronef de type Airbus A320 (marque déposée) est représentatif d'un aéronef auquel s'applique par exemple (non limitatif) la présente invention.

Le poste de pilotage d'un tel aéronef, dans la forme de réalisation représentée sur les figures, intègre une forte densité de matériel (calculateurs, systèmes, ...). De manière originale, comme illustré sur la figure 1, une partie de ce matériel est disposé dans deux armoires 8. Chacune de ces armoires 8 est disposée contre la paroi de séparation 2, l'une d'un côté de la porte 6, l'autre de l'autre côté de cette porte. Ces deux armoires 8 définissent entre elles un couloir 10 à une extrémité duquel se trouve la porte 6.

Le couloir 10 permet un accès aisé et rapide à tout le matériel se trouvant dans les armoires 8. Il participe aussi à la sécurisation de la partie avant de l'aéronef et du poste de pilotage par rapport à une agression potentielle en provenance de la cabine de l'aéronef. Comme il sera expliqué plus loin, ce couloir 10 peut être utilisé aussi comme sas d'isolement entre la cabine de l'aéronef et la zone du poste de pilotage recevant le pilote et le copilote.

La présente invention propose, de manière également originale, de munir le couloir 10, vers l'avant de celui-ci, c'est-à-dire entre la porte 6 et la zone du poste de pilotage occupée par le pilote et le copilote, d'un strapontin 12 pivotant, non fixé au sol. Ce strapontin 12 peut alors remplir également la fonction de porte pouvant séparer le couloir 10, ou au moins une partie de celui-ci, de la zone du poste de pilotage logeant le pilote et le copilote. Un seul strapontin 12 est prévu dans un même poste de pilotage mais les figures 1 et 2 représentent ce strapontin dans trois positions distinctes décrites plus loin.

Le strapontin 12 comporte un châssis 14, formé de préférence par un encadrement métallique résistant, sur lequel sont montés un appui-tête 16, un dossier 18 et une assise 20.

Le châssis 14 est monté pivotant sur un montant structural 22a. Il s'agit, dans un mode de réalisation préféré correspondant à la variante de l'invention illustrée sur les dessins, de l'un des montants structuraux 22a, 22b, 22c et 22d utilisés pour réaliser les armoires 8. Ici, le châssis 14 est monté à l'aide d'une charnière à double articulation (de type porte de saloon) sur un montant structural 22a de l'armoire 8 gauche du poste de pilotage. Le châssis 14 présente une face avant correspondant à la face du châssis portant l'appui-tête 16, le dossier 18 et l'assise 20 ainsi qu'une face arrière opposée à la face avant. Le montant structural 22a, de même que les autres montants structuraux 22b, 22c et 22d, est considéré comme étant vertical et le châssis 14 vient ainsi pivoter autour d'un axe vertical, parallèle audit montant.

L'assise 20 est une assise relevable sensiblement plane, de forme rectangulaire (ou plus précisément parallélépipédique aplatie) et montée pivotante autour d'un axe sensiblement horizontal de manière à pouvoir prendre une position de service dans laquelle elle est sensiblement horizontale et une position repliée dans laquelle elle est sensiblement verticale.

Le dossier 18 est lui aussi de forme globalement rectangulaire (ou plus précisément parallélépipédique aplatie). Il peut être fixé et solidaire du châssis 14 ou bien être mobile par rapport à celui-ci, comme décrit plus loin pour des formes de réalisation préférées permettant d'augmenter le confort du strapontin 12.

L'appui-tête 16 est également de forme globalement rectangulaire (ou plus précisément parallélépipédique aplatie). Il peut être fixé et solidaire du châssis 14 ou bien être mobile par rapport à celui-ci, comme décrit plus loin pour des formes de réalisation préférées permettant d'augmenter le confort du strapontin 12.

Pour limiter l'encombrement du strapontin 12, l'appui-tête 16, le dossier 18 et l'assise 20 sont aussi fin que possible. Des matériaux modernes de type mousse pour réaliser des sièges permettent d'avoir des éléments de strapontin fins et confortables à la fois.

Pour favoriser l'ergonomie de la partie avant de l'aéronef, notamment la maintenabilité système, c'est-à-dire pour permettre aux divers éléments de remplir au mieux leurs fonctions, il est proposé ici que le strapontin 12 puisse prendre trois positions repérées par les lettres A B et C (ainsi qu'éventuellement des positions intermédiaires entre ces trois positions).

Dans la première position A, le strapontin 12 vient fermer le couloir 10. Le châssis 14 et les divers éléments constituant le strapontin 12 sont dimensionnés de telle sorte que cette fermeture du couloir 10 puisse être réalisée. Des moyens de verrouillage 24 sont prévus par exemple pour maintenir le strapontin 12 dans cette première position A en coopérant avec le montant structural 22b se trouvant en vis-à-vis du montant structural 22a sur lequel le châssis 14 est monté pivotant.

Dans une seconde position B, le strapontin 12 est rabattu à l'intérieur du couloir 10 et vient contre une armoire 8. Le strapontin 12 peut par exemple être maintenu dans cette position B à l'aide d'une (ou plusieurs) sangle(s) non représentée. Il conviendra de limiter autant que possible le volume occupé par le strapontin 12 dans cette position afin de ne pas dégrader l'ergonomie de la partie avant de l'aéronef au niveau de ce couloir 10. Cette position est utilisée par exemple pour une évacuation d'urgence qui sera décrite plus loin. Elle peut également être utilisée comme position de stockage pour le strapontin lorsque celui-ci n'est pas utilisé.

La troisième position C correspond à une autre position de stockage possible du strapontin 12. Dans cette position, le strapontin 12 se trouve entièrement dans l'espace avant du poste de pilotage, en avant des armoires 8, et permet un bon accès à celles-ci.

Le couloir 10 comporte de manière classique un sol et un plafond. On a représenté sur la figure 1 une trappe inférieure 26 réalisée dans le sol du couloir 10 et une trappe supérieure 28 réalisée dans le plafond du couloir 10.

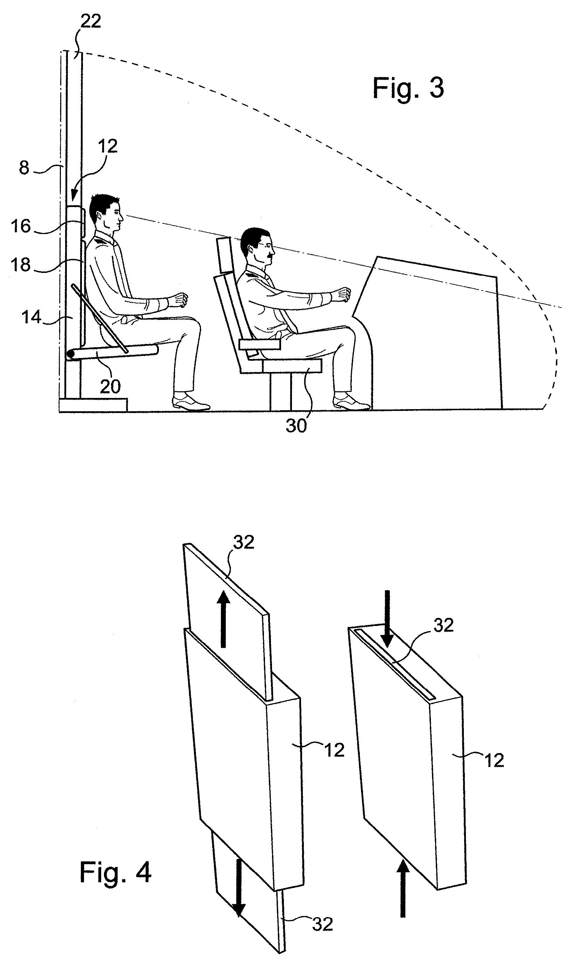

Le strapontin 12 permet de faire bénéficier de la présence d'un siège complémentaire dans le cockpit de l'aéronef. Ce siège est en général à usage occasionnel. Il est par exemple dédié à des fonctions d'instruction des pilotes. Dans ce cas, il est avantageux que l'occupant de ce siège puisse disposer d'une visibilité vers l'extérieur et sur les instruments du poste de pilotage aussi bonne (ou presque) que celle du pilote et du copilote. Le strapontin 12 propose alors, comme illustré sur la figure 3, une assise surélevée par rapport à l'assise des sièges 30 destinés au pilote et au copilote, pour tenir compte notamment du recul du strapontin 12 par rapport aux sièges 30. Le strapontin 12 est également de préférence disposé en position médiane par rapport à l'axe longitudinal de l'aéronef et se trouve ainsi en position reculée et médiane par rapport aux sièges 30.

L'assise 20 du strapontin 12 peut présenter une position réglable en hauteur. Un tel réglage peut être réalisé à l'aide par exemple de réglettes indexées (non représentées) disposées de part et d'autre du couloir pouvant être réglées manuellement. Un réglage électrique peut aussi être envisagé à l'aide d'un système à pignon(s) et crémaillère(s) ou bien un système à câble(s) et poulie(s). Lorsque le strapontin est utilisé pour recevoir un observateur (pendant par exemple une phase d'instruction des pilotes) l'assise 20 sera réglée dans sa position la plus haute. Lorsque le strapontin est utilisé pour accueillir un membre du personnel technique et éviter l'utilisation d'un siège en cabine, l'assise sera réglée dans une position basse, soit la position la plus basse, soit une position intermédiaire en fonction par exemple de la morphologie de la personne utilisant le strapontin.

La solution proposée permet une sécurisation du cockpit. Il est en effet nécessaire sur un aéronef de proposer une configuration de partie avant d'aéronef permettant d'empêcher toute intrusion forcée de la cabine vers le cockpit. Des solutions mettant en oeuvre des cloisons de séparation et des portes sécurisées avec blindages et judas optiques sont alors proposées. Cependant, lors de la sortie d'un occupant du cockpit, aussi courte que soit cette sortie, il faut éviter que la zone cabine soit en communication avec la zone de pilotage. Il est ainsi connu d'avoir un sas d'isolement entre la zone cabine et la zone de pilotage mais les solutions proposées sont le plus souvent pénalisantes car la présence du sas vient perturber l'aménagement de la cabine en y prélevant du volume, et donc en réduisant potentiellement le nombre de sièges et donc les revenus potentiels de l'aéronef. En outre, l'intégration d'un tel sas dans une partie avant d'aéronef est pénalisante en termes de masse et de coût de revient.

La configuration proposée sur la figure 1 permet de réaliser un tel sas de sécurité qui n'est pas pénalisante. La zone centrale arrière du poste de pilotage qui comprend le couloir 10 et qui est associée au strapontin 12 articulé sur les structures latérales de ce couloir permet une bonne intégration du sas de sécurité. Le strapontin 12, lorsqu'il est dans sa première position A, vient jouer le rôle de complément de cloison d'isolement et devient une barrière anti-agression. Le strapontin 12, le couloir 10 et la porte 6 réalisent ainsi un sas de sécurité qui ne présente pas les inconvénients décrits plus haut des sas de sécurité de l'art antérieur. Ce sas est en effet intégré dans la partie avant de l'aéronef en limitant tout surpoids et tout empiètement sur la zone cabine.

Pour remplir au mieux sa fonction de sécurité, le strapontin 12 présentera avantageusement quelques caractéristiques, qui restent toutefois optionnelles.

Avantageusement, la partie arrière de l'assise, du dossier et de l'appui-tête seront renforcés par une coque, de préférence une coque résistante à un impact d'une balle tirée par une arme de poing. La partie arrière de l'assise correspond à la partie de l'assise non utilisée par un observateur (ou autre occupant du strapontin). Cette définition de face arrière vaut également pour le dossier et l'appui-tête. Cette orientation (avant/arrière) est cohérente avec l'orientation avant/arrière choisie pour le châssis 14.

Dans sa première position A, le strapontin 12 présentera de préférence des jeux limités avec d'une part les montants structuraux 22 entre lesquels il se trouve et d'autre part entre le strapontin et le plafond et le sol. Les jeux entre le châssis 14 et les montants structuraux 22 seront de préférence de l'ordre du millimètre dans la première position A. La figure 4 illustre quant à elle une intégration possible en partie haute et basse du strapontin 12 à chaque fois d'une plaque coulissante 32. Chaque plaque coulissante 32 peut prendre une position déployée hors du strapontin 12 (partie de gauche de la figure 4) et une position rentrée (partie de droite de la figure 4). Les plaques coulissantes 32 sont avantageusement blindées et sont destinées à venir obturer l'espace supérieur et l'espace inférieur du couloir en donnant alors l'apparence d'une fermeture complète, comme le ferait une porte.

Les moyens de verrouillage 24 du strapontin permettant de le verrouiller dans sa première position A sont avantageusement opérables des deux côtés du strapontin 12 lorsqu'il se trouve dans cette première position mais il est préférable de prévoir qu'il soit possible, à partir des sièges 30 du pilote et du copilote, d'interdire un déverrouillage de ces moyens de verrouillage 24 depuis le couloir 10.

Il est également envisageable de munir le strapontin 12 d'un système de contrôle, tel par exemple un judas optique (non représenté). Une surveillance par caméra vidéo du couloir 10 peut aussi être prévue en remplacement ou en complément du judas optique.

Ainsi, lors d'une sortie d'un occupant du poste de pilotage vers la cabine de l'aéronef, celui-ci vient se positionner dans le couloir 10. Il ferme ensuite le couloir 10 en positionnant le strapontin 12 dans sa première position A et le verrouille dans cette position. Il déploie également les plaques coulissantes 32 manuellement ou électriquement. Un système de verrouillage (non représenté) de ces plaques coulissantes est prévu pour les maintenir dans leur position déployée. On peut prévoir que le verrouillage des plaques coulissantes 32 dans leur position déployée et du strapontin 12 dans sa première position A s'effectue dans une même manoeuvre. L'ouverture ultérieure de la porte formée par le strapontin 12 (et la rétractation des plaques coulissantes 32 dans le strapontin) ne peut être opérée que depuis la zone du cockpit se trouvant en avant du strapontin 12, par exemple depuis les sièges 30. La personne qui souhaite quitter le cockpit est alors isolée dans le couloir 10, la porte 6 étant supposée fermée. Après avoir regardé à travers un judas optique équipant la porte 6 ou un écran de contrôle d'une caméra de surveillance, ladite personne peut quitter le couloir 10 et se rendre dans la zone cabine en veillant bien entendu à refermer derrière elle la porte 6. Un auto-verrouillage de cette dernière peut être avantageusement prévu.

La partie avant de l'aéronef comporte, en dessous du poste de pilotage, généralement une soute technique à laquelle il peut être accédé par une trappe. On suppose ici que l'aéronef considéré comporte une telle soute inférieure. Son accès est prévu alors par la trappe inférieure 26 qui est avantageusement et originalement disposée dans le couloir 10, juste derrière le strapontin 12 lorsque celui-ci est en position fermée correspondant à la première position A.

Pour accéder confortablement à la soute technique, il est prévu généralement d'intégrer dans ladite soute une échelle de longueur suffisante pour permettre un accès facilité à celle-ci depuis le niveau correspondant au sol de la cabine et/ou du poste de pilotage. Il s'agit alors d'une échelle fixée à demeure. Un certain nombre d'adaptations de l'environnement sont nécessaires pour que l'échelle soit installée à un endroit convenable ne gênant pas trop l'accès aux divers systèmes installés dans la soute technique et soit suffisamment rigide lors de son utilisation. Globalement, le volume de la soute technique est pénalisé par la présence de cette échelle qui limite la place disponible pour l'installation de systèmes et/ou l'accès à ceux-ci.

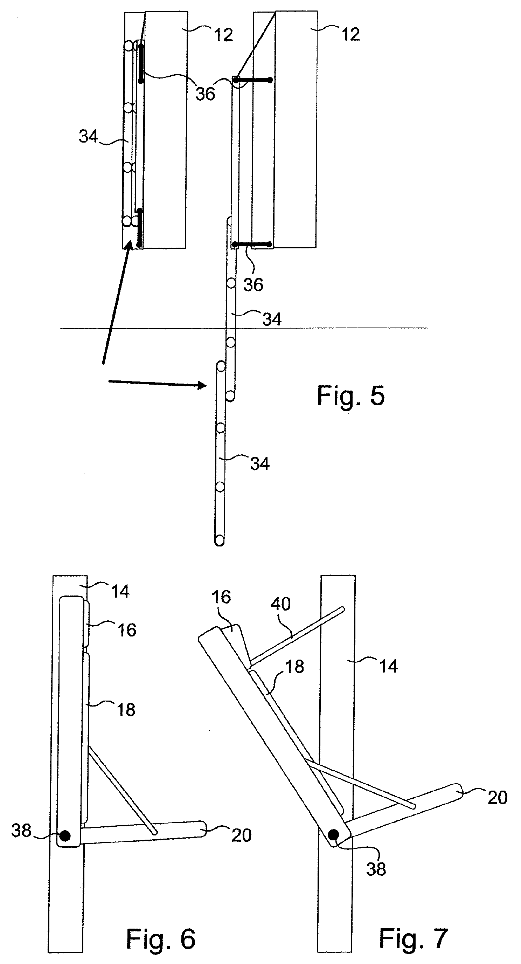

De façon originale, comme illustré de manière schématique sur la figure 5, il est proposé d'intégrer au dos du strapontin 12 une échelle. Cette dernière est par exemple une échelle à deux brins 34 dont l'un coulisse par rapport à l'autre. Ces deux brins 34 d'échelle sont montés sur la face arrière du strapontin 12, par exemple sur la face arrière du châssis 14, par l'intermédiaire d'un double parallélogramme déformable 36 (un parallélogramme de chaque côté de l'échelle). Le double parallélogramme déformable 36 permet d'assurer le déport de l'échelle par rapport au strapontin 12 comme illustré sur la partie de droite de la figure 5. On peut noter ici que l'échelle peut ne comporter qu'un seul brin (ou au contraire trois brins ou plus).

La trappe inférieure 26 est disposée avantageusement dans le couloir 10 de telle sorte que lorsque le strapontin 12 est dans sa première position A, et que ladite trappe est ouverte, les brins 34 de l'échelle viennent se déployer de telle sorte qu'ils "tombent" dans la soute technique.

De la sorte, l'échelle d'accès à la soute technique ne vient plus pénaliser le volume de celle-ci (et il ne pénalise pas non plus le volume du poste de pilotage). Lorsque quelqu'un veut alors accéder à la soute technique, il vient verrouiller le strapontin 12 dans sa première position A, il ouvre la trappe inférieure 26, fait descendre l'échelle par la trappe inférieure 26, et peut alors accéder à la soute technique. Pour ne pas être gêné par l'échelle, il peut remonter celle-ci. Une fois son intervention dans la soute technique terminée, il redéploye l'échelle à travers la trappe inférieure 26, remonte, replie l'échelle et ferme la trappe inférieure 26.

La présente invention prend également en compte les évacuations d'urgence des cockpits. Il est prévu réglementairement de permettre une évacuation d'urgence en cas de crash de l'ensemble du personnel du cockpit dans un temps très bref.

Les solutions les plus courantes sont l'évacuation par les glaces latérales ouvrantes et l'évacuation par une trappe centrale disposée sur le toit de l'aéronef, généralement le plus en retrait possible de l'espace cockpit.

La présente invention propose une évacuation par le toit. On remarque à cet effet la présence de la trappe supérieure 28 sur la figure 1. Il est proposé, de manière tout à fait originale, d'utiliser le strapontin 12 pour réaliser une telle évacuation. Le strapontin 12 est alors positionné dans sa seconde position B, ou position de stockage arrière, dans le couloir 10. Il est prévu alors, dans cette position, d'abaisser l'assise 20 pour que celle-ci vienne dans sa position sensiblement horizontale. Elle peut alors servir de marche d'accès à la trappe supérieure 28. La taille de l'assise 20 étant très grande (par rapport à une marche d'escalier ou un échelon d'échelle), l'assise 20 peut être utilisée pour se donner de l'impulsion et ainsi s'extraire plus facilement par la trappe supérieure 28. De la sorte, la procédure de sortie est simplifiée et sécurisée.

Lorsqu'un cockpit d'aéronef est muni de trois sièges, le troisième siège est prévu pour un usage très occasionnel. Il est toutefois de plus en plus utilisé par les compagnies aériennes comme siège supplémentaire, permettant à une compagnie de faire voler à moindre frais son personnel technique sans occuper un siège payant en cabine. Il arrive ainsi que le troisième siège soit utilisé pour des vols relativement longs. Le confort de ce siège est donc de préférence amélioré par rapport à un strapontin basique.

Lorsqu'un passager (personnel technique par exemple) utilise le troisième siège du cockpit, le strapontin 12 selon la présente invention est dans sa première position A. Dans la configuration originale suggérée par la présente invention, l'espace à l'arrière de ce troisième siège, celui du couloir 10, n'est pas utilisé. Il peut alors être mis à profit pour augmenter le confort du passager comme illustré sur les figures 6 et 7. Le siège correspondant peut être basculé vers l'arrière.

Pour réaliser un tel basculement, un système de deux pivots 38 et un système de deux bielles 40 sont prévus.

Les deux pivots 38 sont montés latéralement au niveau de l'assise 20 de manière à permettre un pivotement de l'assise 20 et du dossier 18 par rapport au châssis 14.

Les deux bielles 40 sont prévues de part et d'autre de l'ensemble formé par le dossier 18 et l'assise 20 et relient cet ensemble au châssis 14. Chaque bielle 40 est montée pivotante sur le châssis 14 et est rattachée au dossier 18, par exemple à proximité de l'appui-tête 16. En prévoyant un réglage pour les bielles 40 (longueur réglable ou bien point d'attache mobile sur le châssis par exemple), il est possible de régler l'inclinaison du siège. Les bielles peuvent aussi être remplacées par des sangles, éventuellement réglables.

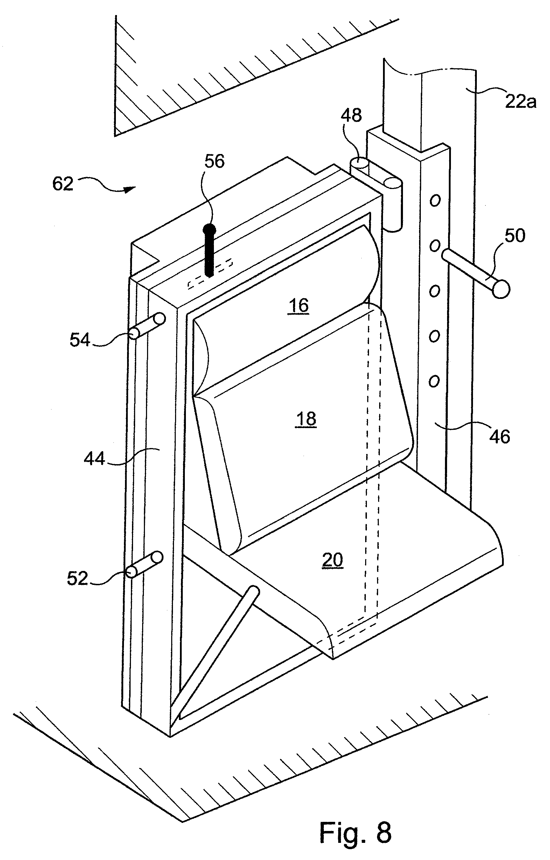

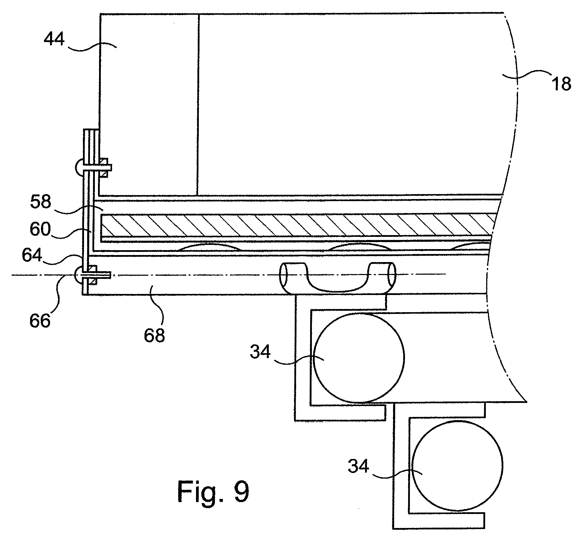

Une variante de réalisation d'un strapontin selon la présente invention est représentée sur les figures 8 et 9.

Dans cette forme de réalisation, on retrouve pour le strapontin une assise 20, un dossier 18 et un appui-tête 16. Ces divers éléments sont montés sur un châssis 44. Ce dernier est monté pivotant par rapport au montant structural 22a par l'intermédiaire, d'une part, d'un profilé intermédiaire 46 et, d'autre part, de charnières doubles 48.

Le profilé intermédiaire 46 vient épouser la forme du montant structural 22a et peut coulisser sur celui-ci. Dans la forme de réalisation représentée sur la figure 8, le profilé intermédiaire 46 est un profilé en U présentant une base de forme plane dont la largeur est adaptée au montant structural 22a et deux branches latérales entre lesquelles vient prendre place le montant structural 22a de telle sorte que le profilé intermédiaire 46 puisse coulisser en limitant les jeux le long du montant structural 22a. De la sorte, un réglage en hauteur du strapontin peut être réalisé. Pour ce réglage en hauteur, le profilé intermédiaire 46 vient glisser le long du montant structural 22a jusqu'à la position souhaitée. On peut prévoir, comme illustré sur la figure 8, un déplacement manuel et le maintien en position du strapontin à l'aide d'une goupille 50 destinée à coopérer avec des trous, d'une part, dans le profilé intermédiaire 46 et, d'autre part, dans le montant structural 22a (ces derniers trous n'étant pas visibles sur la figure 8). Un réglage motorisé peut aussi être prévu. Il est alors possible de disposer un moteur à l'intérieur du montant structural 22a pour assurer le réglage en hauteur du strapontin.

Les charnières doubles 48 (dont une seule est visible sur la figure 8) sont disposées entre le profilé intermédiaire 46 et le châssis 44. Ces charnières permettent, comme pour la forme de réalisation décrite plus haut, au châssis 44 de pivoter de plus de 180°, par exemple jusqu'à 270°.

Du côté du châssis 44 opposé au côté portant les charnières doubles 48, un axe de pivotement horizontal 52 et un axe de verrouillage 54 horizontal sont prévus.

L'axe de pivotement horizontal 52 se prolonge à travers le châssis 44 et vient en prise dans le profilé intermédiaire 46. Cet axe de pivotement horizontal 52 est ainsi avantageusement utilisé à la fois comme axe pour faire pivoter l'assise 20 du strapontin par rapport au châssis 44 et comme axe pour faire pivoter l'ensemble du châssis 44 par rapport à son environnement, ici notamment le profilé intermédiaire 46 et les montants structuraux 22a et 22b. L'extrémité visible sur la figure 8 de l'axe de pivotement horizontal 52 peut se rétracter vers l'intérieur du châssis 44 ou bien venir en prise avec le montant structural 22b ou bien une pièce intermédiaire (non représentée) similaire à la pièce intermédiaire 46 et montée sur le montant structural 22b. Dans la première position, la rotation autour des charnières doubles 48 est libre ; dans la seconde position, le châssis 44 peut pivoter autour de l'axe de pivotement horizontal 52 en libérant les charnières doubles 48. L'axe de pivotement horizontal 52 participe dans la seconde position au verrouillage du châssis 44 dans son mouvement pivotant autour d'un axe vertical.

L'axe de verrouillage 54 est un axe rétractable qui peut venir loger à l'intérieur du châssis 44 ou bien venir en saillie hors de celui-ci pour coopérer avec le montant structural 22b (ou bien la pièce intermédiaire non représentée et évoquée plus haut qui se trouve sur le montant structural 22b et similaire à la pièce intermédiaire 46) et réaliser un verrouillage en position verticale du châssis 44 entre les deux montants structuraux 22a et 22b. Un levier 56 permet d'agir sur une tringlerie interne au châssis 44 pour commander soit le verrouillage du châssis dans sa position alignée entre les deux montants structuraux 22a et 22b, soit permettre un pivotement horizontal, soit permettre un pivotement vertical. On retrouve ici un mécanisme interne au châssis similaire à un mécanisme de porte ou fenêtre dite oscillo-battante.

La figure 9 illustre comment une plaque coulissante telle celle illustrée sur la figure 4 et une échelle telle celle illustrée sur la figure 5 peuvent être adaptées et intégrées dans le strapontin de la figure 8. Cette figure 9 est une section partielle selon un plan de coupe horizontal et à échelle agrandie d'un bord du strapontin. On reconnaît tout d'abord le châssis 44. On suppose par exemple que le plan de coupe choisi passe par le dossier 18 du strapontin. À l'arrière du dossier se trouve un logement 58 fermé par un couvercle 60 dans lequel la plaque coulissante 32 est logée et duquel elle peut sortir, par exemple vers le haut. Dans l'exemple de la figure 8, on remarque un espace 62 au-dessus du strapontin. Ce dernier peut être alors obturé par la plaque coulissante 32 lorsque celle-ci vient coulisser vers le haut hors de son logement. De même une plaque coulissante logée également dans le logement 58 peut venir fermer un espace libre inférieur entre le strapontin et le sol du couloir 10.

À l'extérieur du couvercle 60, du côté opposé au dossier 18, le châssis 44 porte deux brins 34 d'échelle. Ces brins 34 d'échelle sont portés par des bras 64 dont un seul est visible ici. Comme illustré, les fixations du couvercle 60 peuvent être utilisées pour la fixation des bras 64 sur le châssis 44. Une plaque 68 (figure 9) est montée pivotante autour d'un axe de pivotement 66 pour permettre un mouvement pivotant de l'échelle autour d'un axe sensiblement horizontal. Par rapport à la figure 5, la plaque 68 correspond à deux bras 36, un bras 36 d'un parallélogramme déformable d'un côté de l'échelle et un autre bras 36 de l'autre parallélogramme déformable de l'autre côté de l'échelle. Un premier brin 34 de l'échelle est monté articulé sur le dessus de la plaque 68 supérieure comme illustré sur la figure 9, l'axe d'articulation du brin 34 pouvant être confondu avec l'axe d'articulation 66.

La présente invention propose ainsi, d'une part, un strapontin original et, d'autre part, un aménagement de partie avant d'aéronef original intégrant un tel strapontin.

Dans la description faite ci-dessus, qui correspond à un mode de réalisation préférentiel, le strapontin peut prendre plusieurs positions de stockage afin de favoriser l'ergonomie du poste de pilotage correspondant. Les divers réglages pouvant être opérés au niveau du strapontin (inclinaison, réglage en hauteur) lui permettent d'être polyvalent. Le strapontin peut ainsi être utilisé par un observateur (de préférence avec le siège réglé dans sa position la plus haute pour favoriser une bonne visualisation des instruments et au travers du pare-brise) ou par un membre du personnel même sur de longs vols.

L'aménagement proposé du cockpit permet d'obtenir un haut degré de sécurité vis-à-vis d'une intrusion de la cabine vers le poste de pilotage sans supplément de masse sensible. On peut remarquer à ce sujet que les panneaux de la paroi de séparation entre le poste de pilotage et la zone cabine n'ont pas besoin d'être blindé (ou peuvent être seulement légèrement blindés) puisqu'ils se trouvent contre les armoires systèmes placées dans le poste de pilotage. Une attaque contre ces panneaux a peu de chances d'aboutir car les armoires systèmes les renforcent "naturellement".

L'aménagement proposé présente aussi des solutions originales, d'une part, pour l'accès à une soute technique disposée en dessous du poste de pilotage et, d'autre part, pour une évacuation d'urgence vers le haut des membres d'équipage se trouvant dans le cockpit en cas d'accident.

La présente invention ne se limite pas à la forme de réalisation préférée décrite ci-dessus à titre d'exemple non limitatif et représentée sur les dessins. Elle concerne toutes les variantes de réalisation à la portée de l'homme du métier dans le cadre des revendications ci-après.

## Revendications

1. Poste de pilotage d'un aéronef comportant des organes de commande et/ou visualisation, au moins un siège (30), une porte d'accès (6) et un couloir (10) d'accès audit siège (30) fermé à son extrémité opposée audit siège (30) par la porte d'accès (6),
**caractérisé en ce qu'**un strapontin (12), comportant un châssis (14) pivotant autour d'un axe vertical et sur lequel sont montés une assise (20) et un dossier (18), est monté dans le couloir (10) de telle sorte qu'il puisse pivoter et prendre une première position dans laquelle il ferme le couloir (10) formant ainsi un sas avec la porte d'accès (6) et une deuxième position dans laquelle il permet l'accès audit siège (30) à partir du couloir (10).

2. Poste de pilotage d'un aéronef selon la revendication 1, **caractérisé en ce que** le strapontin (12), dans sa deuxième position, est rabattu contre un élément (8) délimitant le couloir (10) et peut également prendre une troisième position pivotée d'au moins 135° par rapport à la deuxième position.

3. Poste de pilotage d'un aéronef selon l'une des revendications 1 ou 2, **caractérisé en ce que** le couloir (10) d'accès comporte un sol dans lequel se trouve une trappe d'accès (26) à une zone technique inférieure, et **en ce que** la trappe d'accès se trouve juste derrière le strapontin lorsque celui-ci est dans sa première position.

4. Poste de pilotage d'un aéronef selon l'une des revendications 1 à 3, **caractérisé en ce que** le couloir (10) d'accès comporte un plafond dans lequel se trouve une trappe (28) de secours et d'évacuation d'urgence, et en ce ladite trappe (28) de secours est disposée de telle sorte qu'elle se trouve au-dessus de l'assise (20) lorsque le strapontin (12) est rabattu contre un élément (8) délimitant le couloir (10).

5. Poste de pilotage d'un aéronef selon l'une des revendications 1 à 4, **caractérisé en ce que** le couloir (10) est délimité latéralement par des meubles (8).

6. Poste de pilotage d'un aéronef selon la revendication 5, **caractérisé en ce qu'**au moins un meuble (8) comporte un montant structural (22a), et **en ce que** le strapontin (12) est monté pivotant par rapport audit montant structural (22a).

7. Poste de pilotage d'un aéronef selon l'une des revendications 1 à 6, **caractérisé en ce que** le strapontin (12) comporte en partie basse et en partie haute à chaque fois une plaque coulissante (30) blindée.

8. Poste de pilotage d'un aéronef selon la revendication 7, **caractérisé en ce que** le strapontin (12) dans sa première position vient fermer le sas à l'aide des plaques coulissantes(30).

9. Poste de pilotage d'un aéronef selon l'une des revendications 1 à 8, **caractérisé en ce que** la face arrière du strapontin, c'est-à-dire la face n'étant pas destinée à venir au contact d'un utilisateur du strapontin (12), est renforcée de manière à être résistante à l'impact de projectiles d'une arme à feu.

10. Poste de pilotage d'un aéronef selon l'une des revendications 1 à 9, **caractérisé en ce que** le strapontin (12) porte sur sa face arrière, c'est-à-dire la face opposée à celle destinée à recevoir un utilisateur, une échelle (34) montée par l'intermédiaire d'au moins un parallélogramme déformable (36 ; 68).

11. Poste de pilotage d'un aéronef selon l'une des revendications 1 à 10, **caractérisé en ce que** le strapontin (12) est réglable en hauteur.

12. Poste de pilotage d'un aéronef selon la revendication 11, **caractérisé en ce que** le strapontin (12) est monté sur des pièces structurales du poste de pilotage par l'intermédiaire d'au moins un profilé intermédiaire (46) pouvant coulisser sur une pièce structurale portant le strapontin (12).

13. Poste de pilotage d'un aéronef selon l'une des revendications 1 à 12, **caractérisé en ce que** le dossier (18) du strapontin est inclinable.

14. Aéronef, **caractérisé en ce qu'**il comporte un poste de pilotage selon l'une des revendications 1 à 13.

## Patentansprüche

1. Cockpit eines Luftfahrzeugs, umfassend Steuer- und/oder Sichtelemente, mindestens einen Sitz (30), eine Zugangstür (6) und einen Gang (10) zum Zugang zu dem Sitz (30), der an seinem Ende, das dem Sitz (30) gegenüberliegt, durch die Zugangstür (6) geschlossen ist,
**dadurch gekennzeichnet, dass** ein Klappsitz (12), der ein Gestell (14) umfasst, das um eine senkrechte Achse schwenkbar ist und an dem eine Sitzfläche (20) und eine Rückenlehne (18) montiert sind, in dem Gang (10) derart montiert ist, dass er schwenken kann und eine erste Position, in der er den Gang (10) schließt und somit eine Durchgangsschleuse mit der Zugangstür (6) bildet, und eine zweite Position, in der er den Zugang zu dem Sitz (30) vom Gang (10) aus zulässt, einnehmen kann.

2. Cockpit eines Luftfahrzeugs nach Anspruch 1, **dadurch gekennzeichnet, dass** der Klappsitz (12) in seiner zweiten Position gegen ein Element (8), das den Gang (10) begrenzt, eingeklappt ist und auch eine dritte Position einnehmen kann, die im Verhältnis zu der zweiten Position um mindestens 135° verschwenkt ist.

3. Cockpit eines Luftfahrzeugs nach einem der Ansprüche 1 oder 2, **dadurch gekennzeichnet, dass** der Zugangsgang (10) einen Boden umfasst, in dem sich eine Klappe (26) zum Zugang zu einer unteren technischen Zone befindet, und dass sich die Zugangsklappe genau hinter dem Klappsitz befindet, wenn sich dieser in seiner ersten Position befindet.

4. Cockpit eines Luftfahrzeugs nach einem der Ansprüche 1 bis 3, **dadurch gekennzeichnet, dass** der Zugangsgang (10) eine Decke umfasst, in der sich eine Notfall- und Notfluchtklappe (28) befindet, und dass die Notfallklappe (28) derart angeordnet ist, dass sie sich über der Sitzfläche (20) befindet, wenn der Klappsitz (12) gegen ein Element (8), das den Gang (10) begrenzt, eingeklappt ist.

5. Cockpit eines Luftfahrzeugs nach einem der Ansprüche 1 bis 4, **dadurch gekennzeichnet, dass** der Gang (10) seitlich von Möbelstücken (8) begrenzt ist.

6. Cockpit eines Luftfahrzeugs nach Anspruch 5, **dadurch gekennzeichnet, dass** mindestens ein Möbelstück (8) einen Strukturpfosten (22a) umfasst, und dass der Klappsitz (12) im Verhältnis zu dem Strukturpfosten (22a) schwenkbar montiert ist.

7. Cockpit eines Luftfahrzeugs nach einem der Ansprüche 1 bis 6, **dadurch gekennzeichnet, dass** der Klappsitz (12) im unteren Teil und im oberen Teil jeweils eine gepanzerte Schiebeplatte (30) umfasst.

8. Cockpit eines Luftfahrzeugs nach Anspruch 7, **dadurch gekennzeichnet, dass** der Klappsitz (12) in seiner ersten Position die Durchgangsschleuse anhand der Schiebeplatten (30) schließt.

9. Cockpit eines Luftfahrzeugs nach einem der Ansprüche 1 bis 8, **dadurch gekennzeichnet, dass** die Rückseite des Klappsitzes, d.h. die Seite, die nicht dazu gedacht ist, mit einem Benutzer des Klappsitzes (12) in Kontakt zu kommen, derart verstärkt ist, dass sie dem Aufprall von Geschossen einer Schusswaffe standhält.

10. Cockpit eines Luftfahrzeugs nach einem der Ansprüche 1 bis 9, **dadurch gekennzeichnet, dass** der Klappsitz (12) auf seiner Rückseite, d.h. der Seite gegenüber derjenigen, die dazu gedacht ist, einen Benutzer aufzunehmen, eine Leiter (34) trägt, die über mindestens ein verformbares Parallelogramm (36; 68) montiert ist.

11. Cockpit eines Luftfahrzeugs nach einem der Ansprüche 1 bis 10, **dadurch gekennzeichnet, dass** der Klappsitz (12) in der Höhe verstellbar ist.

12. Cockpit eines Luftfahrzeugs nach Anspruch 11, **dadurch gekennzeichnet, dass** der Klappsitz (12) auf Strukturteilen des Cockpits anhand mindestens eines Zwischenprofils (46) montiert ist, das auf einem Strukturteil, das den Klappsitz (12) trägt, gleiten kann.

13. Cockpit eines Luftfahrzeugs nach einem der Ansprüche 1 bis 12, **dadurch gekennzeichnet, dass** die Rückenlehne (18) des Klappsitzes schrägstellbar ist.

14. Luftfahrzeug, **dadurch gekennzeichnet, dass** es ein Cockpit nach einem der Ansprüche 1 bis 13 umfasst.

## Claims

1. Flight deck of an aircraft, the flight deck comprising: control and/or viewing devices, at least one seat (30), an access door (6) and a corridor (10) for access to said seat (30), which is closed at its opposite end to said seat (30) by the access door (6),
**characterised in that** a folding seat (12), comprising a frame (14) which pivots about a vertical axis and on which are mounted a seat-rest (20) and a back-rest (18), is mounted in the corridor (10) such that it can pivot and adopt a first position in which it closes the corridor (10) thus forming a lock enclosure with the access door (6) and a second position in which it enables the access to said seat (30) from the corridor (10).

2. Aircraft flight deck according to claim 1, **characterised in that** the folding seat (12) is, in its second position, folded back against a member (8) delimiting the corridor (10) and can also adopt a third position pivoted through at least 135° relative to the second position.

3. Aircraft flight deck according to either of claims 1 and 2, **characterised in that** the access corridor (10) comprises a floor in which is located a hatch door (26) for access to a lower equipment zone, and **in that** the access hatch door is located just behind the folding seat when the folding seat is in its first position.

4. Aircraft flight deck according to one of claims 1 to 3, **characterised in that** the access corridor (10) comprises a ceiling in which is located a hatch door (28) for rescue and emergency evacuation, and **in that** said rescue hatch door (28) is arranged so as to be located above the seat-rest (20) when the folding seat (12) is folded back against a member (8) delimiting the corridor (10).

5. Aircraft flight deck according to one of claims 1 to 4, **characterised in that** the corridor (10) is delimited laterally by furniture (8).

6. Aircraft flight deck according to claim 5, **characterised in that** at least one item of the furniture (8) comprises a structural upright (22a), and **in that** the folding seat (12) is pivotally mounted relative to the structural upright (22a).

7. Aircraft flight deck according to one of claims 1 to 6, **characterised in that** the folding seat (12) comprises an armoured sliding plate (30) in each of a lower portion and an upper portion of the folding seat.

8. Aircraft flight deck according to claim 7, **characterised in that** the folding seat (12) in its first position closes the lock enclosure using the sliding plates (30).

9. Aircraft flight deck according to one of claims 1 to 8, **characterised in that** the back face of the folding seat, that is to say the face not being intended to come into contact with the user of the folding seat (12), is reinforced so as to be resistant to the impact of projectiles from a firearm.

10. Aircraft flight deck according to one of claims 1 to 9, **characterised in that** the folding seat (12) bears on its back face, that is to say the face opposite to that intended to receive a user, a ladder (34) mounted via at least one deformable parallelogram (36; 68).

11. Aircraft flight deck according to one of claims 1 to 10, **characterised in that** the folding seat (12) is adjustable in height.

12. Aircraft flight deck according to claim 11, **characterised in that** the folding seat (12) is mounted on structural components of the flight deck via at least one intermediate member of profiled cross-section (46) able to slide on a structural component bearing the folding seat (12).

13. Aircraft flight deck according to one of claims 1 to 12, **characterised in that** the back-rest (18) of the folding seat is tiltable.

14. Aircraft, **characterised in that** it comprises a flight deck according to one of claims 1 to 13.
